Europäisches Patentamt

European Patent Office

Office européen des brevets

(19)

(11) Veröffentlichungsnummer: **0 224 728**
**B1**

(12) **EUROPÄISCHE PATENTSCHRIFT**

(45) Veröffentlichungstag der Patentschrift: **18.07.90**

(51) Int. Cl.⁵: **G 21 C 3/32**

(21) Anmeldenummer: **86115159.5**

(22) Anmeldetag: **31.10.86**

(54) Siedewasser-Kernreaktorbrennelement.

(30) Priorität: **14.11.85 DE 3540466**

(43) Veröffentlichungstag der Anmeldung:
**10.06.87 Patentblatt 87/24**

(45) Bekanntmachung des Hinweises auf die
Patenterteilung:
**18.07.90 Patentblatt 90/29**

(84) Benannte Vertragsstaaten:
**CH DE LI SE**

(56) Entgegenhaltungen:
**EP-A-0 086 427**
**FR-A-1 276 233**
**FR-A-2 166 089**

(73) Patentinhaber: **Siemens Aktiengesellschaft**
**Wittelsbacherplatz 2**
**D-8000 München 2 (DE)**

(72) Erfinder: **Lill, Günther, Dr. Dipl.-Phys.**
**Händelstrasse 10**
**D-8522 Herzogenaurach (DE)**
Erfinder: **Holzer, Rolf, Dipl.-Phys.**
**Schallershoferstrasse 48a**
**D-8520 Erlangen (DE)**
Erfinder: **Lettau, Hans, Dipl.-Ing. (FH)**
**Lettenfeld 14**
**D-8521 Effeltrich (DE)**

Courier Press, Leamington Spa, England.

## Beschreibung

Die Erfindung betrifft ein Siedewasserkernreaktorbrennelement nach dem Gattungsbegriff des Patentanspruches 1.

Ein derartiges Kernreaktorbrennelement ist aus der US—A—38 08 098 bekannt. Sein Wasserrohr ist ein Hohlzylinder und dezentral im gedachten Gitter angeordnet. Dieses Wasserrohr bildet im Kernreaktorbrennelement einen Innenkanal, durch das im Siedewasserkernreaktor Wasser hindurchströmt, das über die gesamte Länge des Kernreaktorbrennelementes nicht siedet. Dadurch bewirkt das Wasser im Wasserrohr eine verbesserte Verteilung des Flusses der thermischen Neutronen und damit eine erhöhte Reaktivität im Reaktorkern des Siedewasserreaktors.

Bei dem bekannten Kernreaktorbrennelement haben Strömungsunterkanäle in Längsrichtung des Kernreaktorbrennelementes, die vom Wasserrohr und benachbarten Brennstäben gebildet werden und die in einem Siedewasserkernreaktor in Längsrichtung des Kernreaktorbrennelementes von einem Wasser-Dampf-Gemisch durchströmt werden, einen anderen Querschnitt als andere Strömungsunterkanäle, die nur durch den Zwischenraum von benachbarten Brennstäben gebildet werden, Der Unterschied der Querschnitte ist um so größer, je größer der Querschnitt des Wasserrohres ist und je mehr Maschen des gedachten Gitters von diesem Querschnitt eingenommen werden. Durch diesen Unterschied der Querschnitte wird eine Ungleichverteilung des das Kernreaktorbrennelement durchströmenden Wasser-Dampf-Gemisches bewirkt, was eine ungleichmäßige Kühlung der Brennstäbe des Kernreaktorbrennelementes zur Folge hat.

Der Erfindung liegt die Aufgabe zugrunde, hier Abhilfe zu schaffen und die Kühlung der Brennstäbe zu vergleichmäßigen.

Zur Lösung dieser Aufgabe hat ein Siedewasserkernreaktorbrennelement der eingangs erwähnten Art erfindungsgemäß die Merkmale des kennzeichnenden Teiles des Patentanspruches 1.

Der durch gerade Linien gebildete Umriß des Querschnittes des prismatisch ausgeführten Wasserrohres erlaubt, den Querschnitt von Strömungsunterkanälen, an deren Bildung das Wasserrohr beteiligt ist, so zu dimensionieren, daß eine weitgehend gleichmäßige Kühlung aller Brennstäbe im Kernreaktorbrennelement erzielt wird.

Auch kann das prismatisch ausgeführte Wasserrohr eine gleichmäßigere Verteilung von Moderatorsubstanz darstellendem Wasser und Kernbrennstoff und damit eine Reaktivitätssteigerung im Siedewasserkernreaktor bewirken.

Aus den Seiten 4 bis 7 aus "ASEA-Journal 3/84" ist zwar ein im Zentrum eines Kernreaktorbrennelementes für einen Siedewasserkernreaktor angeordnetes Wasserrohr bekannt, das ein Hohlkörper mit kreuzförmigen Querschnitt ist.

Dieser Hohlkörper hat aber keinen Abstand vom langgestreckten Brennelementkasten, sondern seine Längskanten sind mit der Innenseite dieses Brennelementkastens verschweißt. Dadurch wird zwar eine verhältnismäßig gleichmäßige Kühlung der Brennstäbe im Kernreaktorbrennelement erzielt, Kernbrennstoff und Wasser ist jedoch im Reaktorkern des Siedewasserkernreaktors nur ungleichmäßig verteilt, da sich ein großer Teil der Wassers im Wasserrohr mit dem kreuzförmigen Querschnitt an den Innenseiten des Brennelementkastens befindet, an dessen Außenseiten sich im Reaktorkern des Siedewasserkernreaktors ohnehin schon Wasser als Moderatorsubstanz befindet.

Das erfindungsgemäße Siedewasserkernreaktorbrennelement bewirkt nicht nur eine gleichmäßige Kühlung der Brennstäbe und eine erhöhte Reaktivität im Siedewasserkernreaktor, sondern es hat auch noch den Vorteil, daß die Brennelementkomponenten wie z.B. Abstandhalter, Brennelementkopf und Brennelementfuß ohne besonderen Aufwand dem Wasserrohr angepaßt werden können. Irgendwelche Anpassungen des Brennelementkastens sind überhaupt nicht erforderlich.

Die vorteilhaften Weiterbildungen des erfindungsgemäßen Siederwasserkernreaktorbrennelementes entsprechend den Patentansprüchen 2 bis 5 bewirken eine verbesserte Symmetrie der Verteilung von aus Wasser bestehender Moderatorsubstanz und Kernbrennstoff im Reaktorkern des Siedewasserkernreaktors und erlauben daher eine gleichmäßigere Verteilung der Anreicherung an spaltbaren Isotopen in den Brennstäben des Kernreaktorbrennelementes.

Aus der FR—A—1 276 233 ist ferner der Reaktorkern eines Druckwasserkernreaktors bekannt. Dieser Reaktorkern hat obere und untere Endplatten, zwischen denen getrennte Brennelement-Einheiten mit Brennstäben angeordnet sind. Diese Brennelementeinheiten haben zwar eine quadratische innere und eine quadratische äußere Wandung und die innere Wandung bildet auch einen Aufnahmeraum für Moderatormaterial, dieses Moderatormaterial muß aber nicht Wasser sein, sondern ist eine organische Verbindung oder sogar ein Feststoff. Im Falle von Wasser als Moderatormaterial ist sogar der Wegfall der inneren Wandung vorgesehen. Daher ist davon auszugehen, daß der von der inneren Wandung gebildete Aufnahmeraum für Moderatormaterial abgeschlossen ist.

Die Erfindung und ihre Vorteile seinen anhand der Zeichnung an einem Ausführungsbeispiel näher erläutert:

Fig. 1 zeigt in perspektivischer Ansicht und teilweise in Explosionsdarstellung das Skelett eines erfindungsgemäßen Kernreaktorbrenelementes.

Fig. 2 zeigt einen Querschnitt des Brennelementkastens in Fig. 1.

Fig. 3 zeigt eine Seitenansicht und

Fig. 4 eine Unteransicht des Wasserrohres im Kernreaktorbrennelement nach Fig. 1.

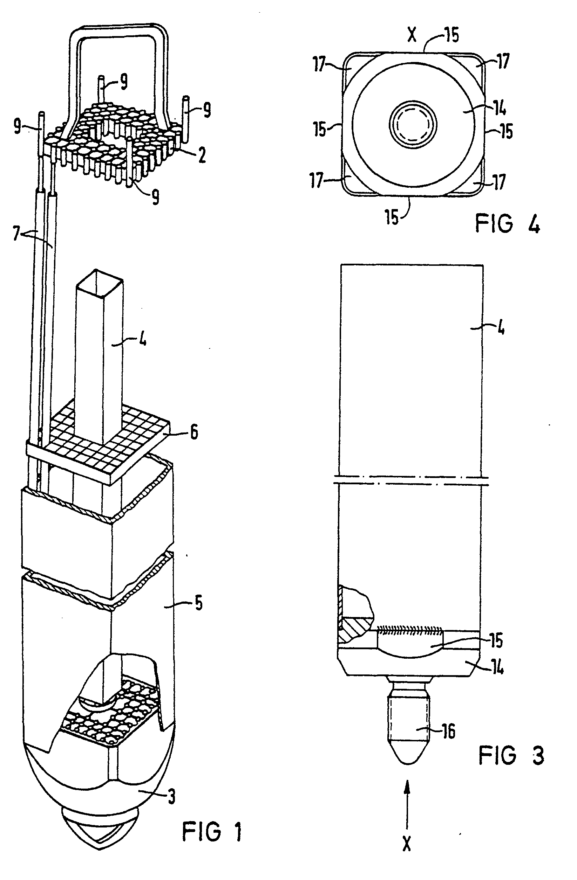

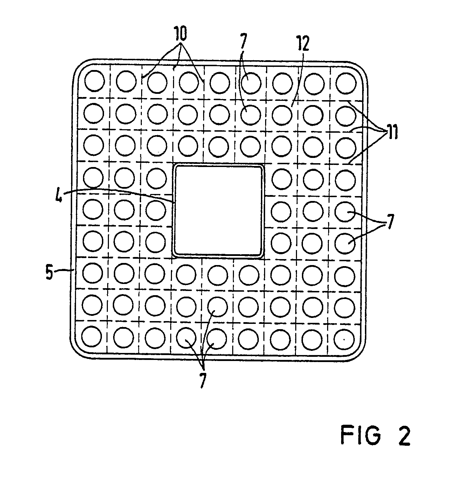

Das Kernreaktorbrennelement nach Fig. 1 weist einen Brennelementkopf 2 und einen Brennelementfuß 3 jeweils mit quadratischem Querschnitt, ein langgestrecktes primsatisches Wasserrohr 4 mit quadratischem Querschnitt und einen langgestreckten Brennelementkasten 5 mit quadratischem Querschnitt auf. Das Wasserrohr 4 ist mittig in gitterförmigen Abstandhaltern 6 angeordnet, die, in Längsrichtung des Wasserrohres 4 gesehen, Abstand voneinander haben. Durch jede Masche dieser Abstandhalter 6 greift ein Kernbrennstoff enthaltender Brennstab 7. Beispielsweise sind acht dieser Brennstäbe 7 sogenannte Tragestäbe, die an beiden Enden Gewindebolzen haben, mit denen sie am Brennelementkopf 2 bzw. am Brennelementfuß 3 festgeschraubt sind. Die anderen Brennstäbe 7 greifen lose mit an ihren beiden Enden befindlichen Bolzen in Durchführungen im Brennelementkopf 2 und Brennelementfuß 3. Sie sind jeweils mit einer auf Druck vorgespannten Schraubenfeder fixiert, die auf den in die Durchführungen im Brennelementkopf 2 greifenden Bolzen auf der Innenseite des Brennelementkopfes 2 sitzen und sich an dieser Innenseite und am betreffenden Brennstab abstützen.

Während Brennelementkopf 2 und Brennelementfuß 3 aus rostfreiem Stahl bestehen, ist der langgestreckte Brennelementkasten 5 aus einer Zirkoniumlegierung gefertigt. Er ist an beiden Enden offen und umfaßt den Brennelementkopf 2 und den Brennelementfuß 3. Am Oberende weist er innen an den Ecken nicht dargestellt Blechstreifen aus, die am Oberende von Stehbolzen 9 an der Oberseite des Brennelementkopfes 2 festgeschraubt sind.

Wie Fig. 2 zeigt, ist in einem Querschnitt des Brennelementkastens 5 an ein durch die gestrichelten Linien 10 und 11 symbolisiertes Gitter gedacht. Die Linien 10 und 11 sind zueinander rechtwinklig und bilden quadratische und an der Innenseite des Brennelementkastens 5 rechtwinklige Maschen 12 des in dem Querschnitt des Brennelementkastens 5 gedachten Gitters. Alle zueinander parallelen Linien 10 sind zu dem einen Seitenpaar des Querschnittes des Brennelementkastens parallel und alle zueinander parallelen Linien 11 sind zu dem anderen Seitenpaar dieses Querschnittes parallel. An jeder Seite dieses Querschnittes hat das durch die Linien 10 und 11 gebildete Gitter neun Maschen 12, d.h. insgesamt besitzt dieses gedachte Gitter 9×9 Maschen.

Das Wasserrohr 4 ist zentral im gedachten Gitter mit den Linien 10 und 11 angeordnet und hat einen quadratischen Querschnitt. Seine Querschnittseiten sind parallel zur jeweils benachbarten Querschnittseite des Brennelementkastens 5. Alle Querschnittseiten des Wasserrohres 4 haben von der jeweils benachbarten Querschnittseite des Brennelementkastens 5 gleichen Abstand.

Der Querschnitt des Wasserrohres 4 deckt 3×3 Maschen des gedachten Gitters im Zentrum dieses Gitters ab. Auf allen Außenseiten des Wasserrohres 4 befinden sich zwischen Wasserrohr 4 und Brennelementkasten 5 insgesamt 72 maschen des gedachten Gitters, in denen jeweils ein Kernbrennstoff enthaltender Brennstab 7 angeordnet ist. Benachbarte Brennstäbe 7 haben voneinander gleichen Abstand.

Wie Fig. 3 zeigt, übergreift das am Oberende offene Wasserrohr 4 mit seinem Unterende ein Bodenteil 14 mit kreisrundem Querschnitt, dessen Mantelfläche vier plane Stellen 15 aufweist, die jeweils voneinander einen Winkelabstand von 90° haben und an denen das Wasserrohr 4 festgeschweißt ist.

An seiner Unterseite weist das aus rostfreiem Stahl bestehende Bodenteil 14 einen Gewindebolzen 16 auf, mit dem es durch eine Durchführung im gitterförmigen Rost auf der Oberseite des Brennelementfußes 3 greift und an dem es mit einer nicht dargestellten Mutter an diesem Brennelementfuß 3 festgeschraubt ist.

Das Bodenteil 14 bildet am Unterende des ebenfalls aus einer Zirkoniumlegierung gefertigten Wasserrohres 4 jeweils zwischen zwei planen Stellen 15 an den Ecken des Querschnittes dieses Wasserrohres 4 vier Durchtrittsöffnungen 17 für Wasser, das in einem Siedewasserkernreaktor das Wasserrohr 4 vom Brennelementfuß 3 in Richtung zum Brennelementkopf 2 durchfließt, im Wasserrohr 4 nicht verdampft und dieses Wasserrohr 4 am Oberende wieder verläßt.

Das das Kernreaktorbrennelement auf der Außenseite des Wasserrohres 4 vom Brennelementfuß 3 zum Brennelementkopf 2 innerhalb des Brennelementkastens 5 in einem Siedewasserkernreaktor durchfließende Wasser gelangt durch den Brennelementfuß 3 in den Brennelementkasten 5, verdampft teilweise an der Außenseite der Brennstäbe 7 und verläßt schließlich den Brennelementkasten 5 als Wasser-Wasserdampf-Gemisch durch den Brennelementkopf 2 hindurch.

**Patentansprüche**

1. Siedewasserkernreaktorbrennelement mit einem langgestreckten Brennelementkasten mit quadratischem Querschnitt und Kernbrennstoff enthaltenden Brennstäben, die im Brennelementkasten mit Abstand voneinander in Maschen eines in einem Kastenquerschnitt gedachten Gitters mit zu den Kastenwänden parallelen Seiten angeordnet sind, sowie mit einem Wasserrohr, dessen Querschnitt mehr als eine Masche des gedachten Gitters abdeckt und das Abstand vom Brennelementkasten hat, wobei zwischen dem Wasserrohr und dem Brennelementkasten sich überall Maschen des gedachten Gitters befinden, die mit Brennstäben besetzt sind, dadurch gekennzeichnet, daß ein Brennelementkopf (2) und ein Brennelementfuß (3) jeweils mit quadratischem Querschnitt vorgesehen und vom Brennelementkasten (5) umfaßt sind, und daß das am Oberende eine Austrittsöffnung für Wasser aufweisende Wasserrohr (4) prismatisch ausgeführt und mit einem Bodenteil (14) versehen ist, das am Unterende des Wasserrohres (4) Durchtrittsöffnungen (17) für Wasser bildet und das am Brennelementfuß (3) angebracht ist.

2. Kernreaktorbrennelement nach Anspruch 1, dadurch gekennzeichnet, daß das Wasserrohr (4) zentral im gedachten Gitter (10, 11) angeordnet ist.

3. Kernreaktorbrennelement nach Anspruch 1 dadurch gekennzeichnet, daß der Querschnitt des Wasserrohres (4) quadratisch ist.

4. Kernreaktorbrennelement nach Anspruch 2 und 3, dadurch gekennzeichnet, daß die Querschnittseiten des Wasserrohres (4) parallel zur jeweils benachbarten Querschnittseite des Brennelementkastens (5) sind und alle gleichen Abstand von der benachbarten Querschnittseite des Brennelementkastens (5) haben.

5. Kernreaktorbrennelement nach Anspruch 4, dadurch gekennzeichnet, daß das dedachte Gitter (10, 11) n×n Maschen (12) mit n≥8 hat, von denen der Querschnitt des zentralen Wasserrohres (n−6)×(n−6) Maschen (12) abdeckt und von denen die restlichen Maschen (12) zwischen Wasserrohr (4) und Brennelementkasten (5) ausschließlich durch Brennstäbe (7) besetzt sind.

## Revendications

1. Assemblage combustible pour un réacteur nucléaire à eau bouillante, comprenant un boîtier-canal oblong de section transversale carrée et des crayons combustibles contenant de la matière combustible et disposés dans le boîtier-canal à distance les uns des autres, dans les mailles d'une grille imaginaire ayant la section transversale du boîtier-canal et les côtés parallèles aux parois du boîtier-canal, ainsi qu'un tube à eau dont la section transversale recouvre plus d'une maille de la grille imaginaire et qui est à une certaine distance du boîtier-canal, toutes les mailles de la grille imaginaire qui sont occupées par des crayons combustibles se trouvant entre le tube à eau et le boîtier-canal, caractérisé en ce qu'il est prévu une tête d'assemblage combustible (2) et un pied d'assemblage combustible (3) de section transversale carrée et entouré du boîtier-canal (5), et en ce que le tube à eau (4) qui comporte à l'extrémité supérieure une ouverture de sortie pour l'eau est agencé de manière prismatique et est muni d'une partie de fond (14) qui forme, à l'extrémité inférieure du tube à eau (4), des orifices de passage (17) pour l'eau et qui est fixée au pied de l'assemblage combustible (3).

2. Assemblage combustible pour un réacteur nucléaire suivant la revendication 1, caractérisé en ce que le tube à eau (4) est disposé dans la partie centrale de la grille imaginaire (10, 11).

3. Assemblage combustible pour un réacteur nucléaire suivant la revendication 1, caractérisé, en ce que la section transversale du tube à eau (4), est carrée.

4. Assemblage combustible pour un réacteur nucléaire suivant la revendication 2 ou 3, caractérisé en ce que les côtés de la section transversale du tube à eau (4) sont respectivement parallèles aux côtés voisins de la section transversale du boîtier-canal (5), et sont tous à la même distance des côtés voisins de la section transversale du boîtier-canal (5).

5. Assemblage combustible pour un réacteur nucléaire suivant la revendication 4, caractérisé, en ce que la grille imaginaire (10, 11) présente n×n mailles (12) avec n≥8, parmi lesquelles (n−6)×(n−6) mailles (12) recouvrent la section transversale du tube à eau central, tandis que les mailles (12) restantes entre le tube à eau (4) et le boîtier-canal (5) sont occupées exclusivement par des crayons combustibles (7).

## Claims

1. Boiling water nuclear reactor fuel element having an elongate fuel element box of square cross-section and fuel rods containing nuclear fuel, these rods being arranged in the fuel element box spaced apart from each other in cells of an imaginary grid of square cross-section, with side parallel to the box walls, and having a water pipe whose cross-section covers more than one cell of the imaginary grid and is spaced from the fuel element box, wherein between the water pipe and the fuel element box there are everywhere cells of the imaginary grid which are occupied by fuel rods, characterised in that a fuel element head (2) and a fuel element foot (3) are each provided with a square cross-section and are enclosed by the fuel element box (5), and in that the water pipe (4), which has an outlet aperture for water at the top end is, made to be prismatic and is provided with a base portion (14) which forms throughflow apertures (17) for water at the lower end of the water pipe (4) and which is fitted on the fuel element foot (3).

2. Nuclear reactor fuel element according to claim 1, characterised in that the water pipe (4) is arranged centrally in the imaginary grid (10, 11).

3. Nuclear reactor fuel element according to claim 1, characterised in that the cross-section of the water pipe (4) is square.

4. Nuclear reactor fuel element according to claims 2 and 3, characterised in that the cross-sectional sides of the water pipe (4) are parallel to the respectively adjacent cross-sectional side of the fuel element box (5) and are all spaced apart by the same distance from the adjacent cross-sectional side of the fuel element box (5).

5. Nuclear reactor fuel element according to claim 4, characterised in that the imaginary grid (10, 11) has n×n cells (12) with n≥8, of which the cross section of the central water pipe covers (n−6)×(n−6) cells (12), and the other cells (12) of which between the water pipe (4) and the fuel element box (5) are occupied exclusively by fuel rods (7).

FIG 1

FIG 4

FIG 3

FIG 2